# EUROPÄISCHE PATENTANMELDUNG

(11) **EP 3 336 628 A1**
(43) Veröffentlichungstag der Anmeldung: **20.06.2018**
(21) Anmeldenummer: 17196572.6
(22) Anmeldetag: 16.10.2017
(51) Int. Cl.: G05B 19/18, G05B 19/418, G05B 23/02

(54) **VERFAHREN UND MOBILE VORRICHTUNG ZUR ANALYSE EINES PRODUKTIONSABLAUFES EINER PRODUKTIONSMASCHINE, SOWIE COMPUTERPROGRAMM, SET ZUR ANALYSE DES PRODUKTIONSABLAUFES DER PRODUKTIONSMASCHINE UND KOFFER**

(30) Priorität: 16.12.2016 DE 102016225251
(71) Anmelder: Robert Bosch GmbH, 70442 Stuttgart (DE)
(72) Erfinder: Zink, Ralf, 74321 Bietigheim-Bissingen (DE); Kircher, Christian, 70499 Stuttgart (DE); Stiedl, Thomas, 71254 Ditzingen (DE)

(57) **Zusammenfassung**

Die Erfindung betrifft eine mobile Vorrichtung zur Analyse eines Produktionsablaufes einer Produktionsmaschine, umfassend eine Videokommunikationsschnittstelle zum Empfangen von Videosignalen der Produktionsmaschine von einer Kamera, zumindest eine Sensorkommunikationsschnittstelle zum Empfangen von Sensorsignalen eines an der Produktionsmaschine angebrachten und/oder anbringbaren Sensors, eine Auswerteeinheit, wobei die Auswerteeinheit eingerichtet ist, die empfangenen Videosignale und die empfangenen Sensorsignale zeitbasiert und/oder ereignisbasiert zu synchronisieren, eine Anzeigeeinheit zur Ausgabe der synchronisierten Signale. Ferner betrifft die Erfindung ein Verfahren zur Analyse eines Produktionsablaufes einer Produktionsmaschine, sowie ein entsprechendes Computerprogramm, ein Set zur Analyse des Produktionsablaufes der Produktionsmaschine und einen Koffer mit einem solchen Set.

## Beschreibung

### Stand der Technik

Die Erfindung betrifft ein Verfahren und eine mobile Vorrichtung zur Analyse eines Produktionsablaufes einer Produktionsmaschine, sowie ein Computerprogramm, ein Set zur Analyse des Produktionsablaufes der Produktionsmaschine und einen Koffer.

Es ist bekannt, dass in der Produktion von Produkten Kennzahlen ermittelt werden, um die Produktion zu steuern und zu überwachen. Beispielsweise werden als Kennzahlen die Produktivität einer Produktionsmaschine und/oder die Anzahl der Stillstände der Produktionsmaschine und/oder die Dauer der Stillstände der Produktionsmaschine ermittelt. Diese Kennzahlen lassen jedoch keinen direkten Rückschluss auf die konkrete Ursache für einen Stillstand der Produktionsmaschine zu. Beispielsweise wirkt sich ein Taktzeitverlust einer Produktionsmaschine auf den Kennwert der Produktivität aus, da die Anzahl der produzierten Teile geringer als die Soll-Stückzahl ist. Die Ursache hierfür ist jedoch nicht ersichtlich. Im Allgemeinen wird zur Ursachenermittlung eine manuelle Analyse an der Produktionsmaschine durchgeführt, indem Servicepersonal den Produktionsprozess visuell beobachtet.

Aus der DE 10 2010 002 174 A1 ist ein Verfahren zur Regelung eines Spritzgießprozesses bekannt. Ein Regler-Modul empfängt Daten aus einer prozessinternen Sensorik der Produktionsmaschine und Daten über den Fertigungsverlauf aus einer externen Sensorik. Das Regler-Modul steuert Prozesseinstellgrößen der Produktionsmaschine in Abhängigkeit der empfangenen Daten.

### Offenbarung der Erfindung

### Vorteile der Erfindung

Das erfindungsgemäße Verfahren mit den Merkmalen des unabhängigen Anspruchs hat demgegenüber den Vorteil, dass durch die zeitbasierte und/oder ereignisbasierte Synchronisation der empfangenen Videosignale mit den empfangenen Sensorsignalen und der Anzeige der synchronisierten Signalen ein Anwender bei der Maschinenanalyse zur Fehler- und Abweichungssuche bei einer Produktionsmaschine besonders vorteilhaft unterstützt wird. Dieser Vorteil wird dadurch erreicht, dass die Vorteile einer visuellen Beobachtung mittels der Kamerabilder der Videosignale mit den Vorteilen der Darstellung von physikalischen Größen, die von den Sensoren erfassten werden, kombiniert werden. Synchronisation bedeutet dabei, dass die Signale zeitlich und/oder ereignisbasiert abgeglichen werden, so dass unterschiedliche Signale, die zum gleichen Zeitpunkt erfasst wurden, auch gemeinsam dargestellt werden. Produktionsmaschinen sind hierbei Maschinen mit denen Produkte hergestellt und/oder bearbeitet werden. Vorzugsweise handelt es sich bei den Produktionsmaschinen um Werkzeugmaschinen zum Bearbeiten von Werkstücken und/oder Arbeitsmaschinen, beispielsweise Verpackungsmaschinen.

Besonders vorteilhaft ist, dass Produktionsmaschinendaten zeitbasiert und/oder ereignisbasiert synchronisiert mit den Videosignalen oder den Sensorsignalen an einer Anzeigeeinheit ausgegeben werden, da dies dazu beiträgt, dass ein Anwender die erfassten Signale einfach und schnell den Produktionsmaschinendaten zuordnen kann, um dadurch Fehler der Produktionsmaschine zu erkennen. Vorteilhaft ist hierbei, dass nicht nur ein einzelnes Sensorsignal ausgegeben wird, sondern mehrere Sensorsignale und/oder zusätzlich Produktionsmaschinendaten synchronisiert ausgegeben werden, so dass ein Anwender alle für eine manuelle Überprüfung notwendigen Daten auf einen Blick dargestellt bekommt.

Vorteilhaft ist ferner, dass die empfangenen Videosignale durch Bildverarbeitungsalgorithmen verarbeitet werden, da hierdurch automatisiert weitere Informationen ermittelt werden und diese dem Anwender zeitbasiert und/oder ereignisbasiert synchronisiert mit den weiteren Sensorsignalen und/oder den Produktionsmaschinendaten angezeigt werden können. Dies trägt in vorteilhafter Weise dazu bei, dass Fehler der Produktionsmaschine schnell und sicher erkannt werden können. In vorteilhafter Weise werden insbesondere durch Objekterkennung und/oder Objektverfolgung Produktionsmaschinenkennwerte, wie Taktzeiten, und/oder vordefinierte Ereignisse ermittelt. Besonders vorteilhaft ist es, dass vordefinierte Ereignisse verwendet werden, die ein Anwender vorab definieren kann und durch die Bildverarbeitungsalgorithmen in den Bildern ermittelt werden. Ein vordefiniertes Ereignis ist beispielsweise der Zeitpunkt der ersten Berührung eines Werkzeugs mit einem Werkstück der Produktionsmaschine. Alternativ oder zusätzlich werden aus den Videosignalen durch die Bildverarbeitungsalgorithmen Zeitdauern für vorgegebene Bewegungen der Produktionsmaschine und/oder der Beginn von Bewegungen oder Abläufen und/oder das Ende von Bewegung oder Abläufen ermittelt.

Die vorstehend genannten Vorteile gelten sinngemäß auch für die beschriebene mobile Vorrichtung zur Analyse eines Produktionsablaufes, das Computerprogramm zur Durchführung des erfindungsgemäßen Verfahrens und das Set zur Analyse des Produktionsablaufes der Produktionsmaschine, sowie dem Koffer.

Besonders vorteilhaft ist, dass eine Hochgeschwindigkeitskamera verwendet wird bzw. dass die Videokommunikationsschnittstelle zum Empfangen von Videosignalen einer Hochgeschwindigkeitskamera eingerichtet ist. Die Hochgeschwindigkeitskamera hat den Vorteil, dass schnelle und insbesondere kurzzeitige Vorgänge der Produktionsmaschine mit hoher zeitlicher Auflösung aufgezeichnet werden können. Vorzugsweise wird eine Hochgeschwindigkeitskamera mit Aufnahmegeschwindigkeiten bis zu 500 Bilder pro Sekunde, vorzugsweise bis zu 1000 Bilder pro Sekunde verwendet. In einer alternativen Ausführung hat die Hochgeschwindigkeitskamera eine Aufnahmegeschwindigkeit bis zu 1 Million Bilder pro Sekunde. Vorzugsweise handelt es sich bei der Hochgeschwindigkeitskamera um eine digitale Hochgeschwindigkeitskamera.

Vorteilhaft ist ferner, dass die Sensorkommunikationsschnittstelle zum drahtlosen Empfangen von Sensorsignalen eingerichtet ist. Vorzugsweise ist die Sensorkommunikationsschnittstelle zum drahtlosen Empfangen als eine Funkschnittstelle eingerichtet, welche Daten insbesondere mittels der Protokolle Bluetooth und/oder Bluetooth Low Energy und/oder ZigBee drahtlos sendet und/oder empfängt. Eine solche Sensorkommunikationsschnittstelle und/oder die Verwendung von entsprechenden drahtlosen Sensoren hat den Vorteil, dass die Sensoren einfach ohne zusätzlichen Verkabelungsaufwand an die Produktionsmaschine angebracht werden können. Dies hat den Vorteil, dass der Installationsaufwand gering ist.

Besonders vorteilhaft ist, dass die mobile Vorrichtung zumindest eine weitere Kommunikationsschnittstelle umfasst, wobei die zumindest eine weitere Kommunikationsschnittstelle zum Empfangen von von der Produktionsmaschine erzeugten Produktionsmaschinendaten eingerichtet ist, wobei die Produktionsmaschinendaten vorzugsweise Fehlercodes von aufgetretenen Fehlern der Produktionsmaschine und/oder Produktionsmaschinenkennwerte, wie Taktzeiten, und/oder Trigger-Signale zur Synchronisation mit dem Bearbeitungsprozess umfassen. Dies trägt dazu bei, dass die von den Sensoren und der Kamera erfassten Signale mit Produktionsmaschinendaten korreliert werden können, so dass ein Anwender schnell den Produktionsablauf in Bezug auf die Produktionsmaschinenkennwerte und den weiteren Signalen der Sensoren und der Kamera erfassen kann und in die Lage versetzt wird, Fehler im Produktionsablauf schnell zu erkennen.

Vorteilhaft ist ein Computerprogramm mit Programmcode-Mitteln, um alle Schritte von dem beschriebenen Verfahren zur Analyse eines Produktionsablaufes durchzuführen, wenn das Programm auf einem Computer und/oder einer mobilen Vorrichtung ausgeführt wird. Bevorzugt weist der Computer und/oder die Auswerteeinheit der mobilen Vorrichtung einen Mikroprozessor mit Programmspeicher auf. Ein Computerprogramm hat den Vorteil, dass das Verfahren zur Analyse eines Produktionsablaufes einfach geändert und bei Bedarf verbessert werden kann.

Besonders vorteilhaft ist ein Set zur Analyse des Produktionsablaufes der Produktionsmaschine umfassend eine mobile Vorrichtung, eine Kamera und zumindest einen an der Produktionsmaschine angebrachten oder anbringbaren, insbesondere drahtlosen, Sensor. Bevorzugt sind die genannten Komponenten des Sets in einem Koffer angeordnet, wobei vorzugsweise jede der Komponenten durch eine Koffereinlage einen vorgegebenen Platz im Koffer hat. Die Koffereinlage ist dabei so gestaltet, dass die Koffereinlage Aussparungen und/oder Vertiefungen aufweist, wobei die Aussparung und/oder Vertiefungen den Umrissen der Komponenten des Sets entsprechen. Dieses Set hat den Vorteil, dass die Lösung mobil ist, da ein Anwender bei einem aufgetreten Problem am Produktionsablauf einer Produktionsmaschine mit dem das Set enthaltenden Koffer zur Maschine gehen kann, die Komponenten aus dem Koffer entnehmen kann und nach Installation in Inbetriebnahme der Komponenten das erfindungsgemäße Verfahren zur Analyse eines Produktionsablaufes einer Produktionsmaschine durchführen kann.

Vorteilhaft ist ferner, dass der zumindest eine Sensor eine mechanische Schnittstelle umfasst, wobei die mechanische Schnittstelle derart ausgebildet ist, dass der zumindest eine Sensor an der Produktionsmaschine anbringbar ist, wobei die mechanische Schnittstelle vorzugsweise einen Magneten umfasst. Dies hat den Vorteil, dass der Sensor einfach an der Produktionsmaschine angebracht und wieder entfernt werden kann.

Besonders vorteilhaft ist ferner, dass der zumindest eine Sensor ausgebildet ist, zumindest eine physikalische Messgröße zu erfassen, insbesondere, dass der Sensor Vibrationen und/oder Luftschall und/oder Licht und/oder eine Annäherung eines Objektes an den Sensor erfasst. Bevorzugt umfasst das Set zur Analyse des Produktionsablaufes der Produktionsmaschinen zumindest zwei Sensoren, die jeweils unterschiedliche physikalische Messgrößen erfassen. Dies hat den Vorteil, dass je nach Anforderung ein Sensortyp aus dem Set gewählt werden kann, um diesen an der Produktionsmaschine anzubringen. Dies trägt zu einer hohen Flexibilität bei. Zudem ist gewährleistet, dass unterschiedlichste Produktionsabläufe erfasst und analysiert werden können.

Weitere Vorteile ergeben sich aus der nachfolgenden Beschreibung von Ausführungsbeispielen mit Bezug zu den Figuren und aus den abhängigen Ansprüchen.

### Kurze Beschreibung der Zeichnungen

Ausführungsbeispiele der Erfindung sind in der Zeichnungen anhand mehrerer Figuren dargestellt und in der nachfolgenden Beschreibung näher erläutert.

Es zeigen:
Fig. 1 eine mobile Vorrichtung zur Analyse des Produktionsablaufes einer Produktionsmaschine,
Fig. 2 ein Verfahren zur Analyse des Produktionsablaufes einer Produktionsmaschine,
Fig. 3 eine Darstellung auf einer Anzeigeeinheit, und
Fig. 4 einen Koffer mit einem Set zur Analyse eines Produktionsablaufes einer Produktionsmaschine.

### Beschreibung von Ausführungsbeispielen

Nachfolgend wird eine mobile Vorrichtung zur Analyse eines Produktionsablaufes einer Produktionsmaschine beschrieben, wobei die mobile Vorrichtung eine Videokommunikationsschnittstelle zum Empfangen von Videosignalen der Produktionsmaschine von einer Kamera, zumindest eine Sensorkommunikationsschnittstelle zum Empfangen von Sensorsignalen eines an der Produktionsmaschine angebrachten und/oder anbringbaren Sensors, eine Auswerteeinheit, wobei die Auswerteeinheit eingerichtet ist, die empfangenen Videosignale und die empfangenen Sensorsignale zeitbasiert und/oder ereignisbasiert zu synchronisieren, eine Anzeigeeinheit zur Ausgabe der synchronisierten Signale umfasst. Ferner wird ein Verfahren zur Analyse eines Produktionsablaufes einer Produktionsmaschine, sowie ein entsprechendes Computerprogramm, ein Set zur Analyse des Produktionsablaufes der Produktionsmaschine und ein Koffer mit einem solchen Set beschrieben.

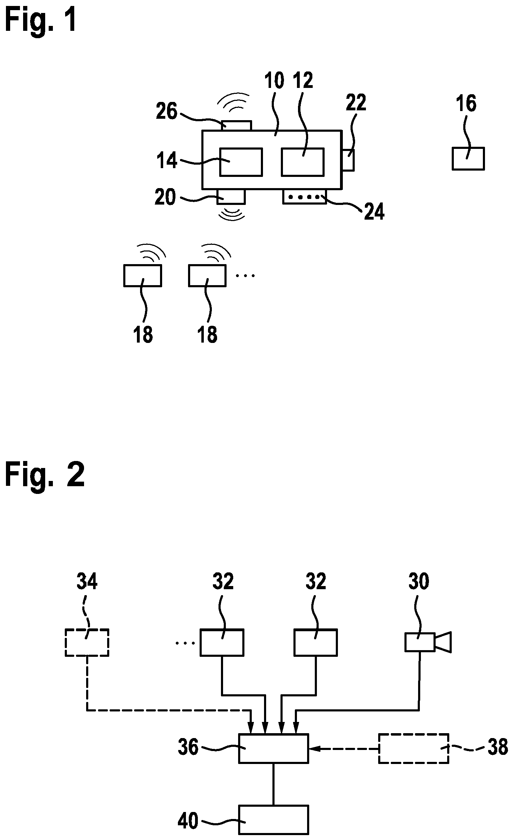

Figur 1 zeigt eine mobile Vorrichtung 10 zur Analyse des Produktionsablaufes einer Produktionsmaschine. Zentrales Element der mobilen Vorrichtung 10 bildet eine Auswerteeinheit 12, die als eingebettetes System (embedded device) ausgeführt ist. Die mobile Vorrichtung 10 weist eine Videokommunikationsschnittstelle 22 auf, über die eine Kamera 16 mit der mobilen Vorrichtung 10 datentechnisch verbunden ist. Im bevorzugten Ausführungsbeispiel ist die Kamera 16 als Hochgeschwindigkeitskamera ausgestaltet.
Die mobile Vorrichtung 10 verfügt zudem über eine Sensorkommunikationsschnittstelle 20 zur Anbindung von drahtlosen Sensoren 18, insbesondere über Bluetooth Low Energy oder ZigBee. Im bevorzugten Ausführungsbeispiel sind zwei Sensoren 18 über die Sensorkommunikationsschnittstelle 20 mit der Auswerteeinheit 14 der mobilen Vorrichtung 10 verbunden. Einer der beiden Sensoren 18 ist als Vibrationssensor ausgebildet und erfasst Vibrationen der Produktionsmaschine. Der zweite Sensor 18 ist als Annäherungssensor ausgebildet und erfasst die Annäherung eines Objektes an den zweiten Sensor 18. Ferner umfasst die mobile Vorrichtung 10 eine weitere Kommunikationsschnittstelle 24. Im bevorzugten Ausführungsbeispiel ist die Kommunikationsschnittstelle 24 als analoge Schnittstelle ausgebildet. Diese Kommunikationsschnittstelle 24 ist dazu ausgebildet, Produktionsmaschinendaten der Produktionsmaschine zu übertragen, insbesondere von der Produktionsmaschine zu empfangen. Die mobile Vorrichtung 10 verfügt zudem über eine WLAN-Schnittstelle 26 zur drahtlosen Anbindung an ein Kommunikationsnetz über WLAN (Wireless Local Area Network). Diese WLAN-Schnittstelle 26 ermöglicht beispielsweise die datentechnische Anbindung der mobilen Vorrichtung 10 an ein Produktionssystem. Die mobile Vorrichtung 10 ist als ein handgeführtes Gerät ausgeführt. Im bevorzugten Ausführungsbeispiel ist die Kamera 16 kabelgebunden mit der mobilen Vorrichtung 10 datentechnisch verbunden. In einer Variante des bevorzugten Ausführungsbeispiels ist die Kamera 16 drahtlos mit der mobilen Vorrichtung 10 verbunden. In einer weiteren Variante ist die Kamera 16 in der mobilen Vorrichtung 10 integriert und fest eingebaut.

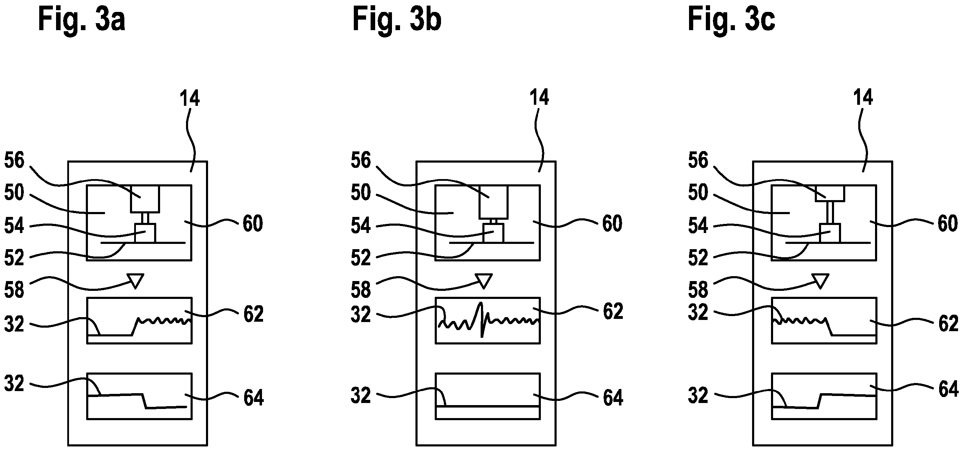

Figur 2 zeigt ein Verfahren zur Analyse des Produktionsablaufes einer Produktionsmaschine, wobei das Verfahren durch die vorstehend beschriebene mobile Vorrichtung durchgeführt wird. In einem ersten Schritt werden Videosignale 30 einer Kamera und Sensorsignale 32 von zwei Sensoren zu der Auswerteeinheit der mobilen Vorrichtung übertragen. In einer Variante werden zusätzlich Produktionsmaschinendaten 34 zu der Auswerteeinheit übertragen. In einem anschließenden Synchronisationsschritt 36 wird eine automatische Synchronisierung, vorzugsweise zeitbasiert und/oder eventbasiert, zwischen den in den Videosignalen 30 enthaltenen Kamerabildern und den zusätzlichen Sensorsignalen 32 durchgeführt. In einer Variante des bevorzugten Verfahrens zur Analyse des Produktionsablaufes werden die Videosignale 30 in einem Bildverarbeitungsschritt 38 Bildverarbeitungsalgorithmen unterzogen und so zusätzliche Kennwerte oder Ereignisse aus den Videosignalen 30 ermittelt. In einem anschließenden Anzeigeschritt 40 werden die synchronisierten Videosignale 30 und die Sensorsignale 32 an einer Anzeigeeinheit dargestellt. Die nachfolgende Figur 3 zeigt beispielshaft eine solche Darstellung an einer Anzeigeeinheit einer mobilen Vorrichtung.

Figur 3 zeigt eine Darstellung der synchronisierten Signale auf einer Anzeigeeinheit 14. Figur 3a zeigt die Anzeigeeinheit 14 der mobilen Vorrichtung. Im oberen Drittel der Anzeigeeinheit 14 wird ein erstes Fenster 60 angezeigt, das ein von der Kamera erzeugtes Bild 50 eines Teils der Produktionsmaschine enthält. Das Bild 50 zeigt einen Maschinentisch 52 auf dem sich ein Werkstück 54 befindet. Das Bild 50 zeigt dabei den Zeitpunkt an dem ein Werkzeug 56 beim Herunterfahren an das Werkstück 54 dieses zum ersten Mal berührt. Der Zeitpunkt der Aufnahme des Bildes 50 wird dabei bezüglich den weiteren Fenstern 62, 64 durch eine Markierung 58 dargestellt. Die Markierung 58 ist als Dreieck ausgeführt. Im mittleren Drittel der Anzeigeeinheit 14 wird ein zweites Fenster 62 angezeigt, das den zeitlichen Verlauf eines Sensorsignals 32 eines ersten Sensors zeigt. Im bevorzugten Ausführungsbeispiel ist der erste Sensor als Vibrationssensor ausgeführt und am Maschinentisch 52 der Produktionsmaschine befestigt. Bis zum Zeitpunkt des ersten Kontaktes des Werkstücks 54 mit dem Werkzeug 56 werden keine Vibrationen vom ersten Sensor erfasst. Beim Zeitpunkt des ersten Kontaktes wird ein Anstieg der Vibrationen registriert, die im Weiteren um einen Mittelwert schwanken. Im unteren Drittel der Anzeigeeinheit 14 wird ein drittes Fenster 64 angezeigt, das den zeitlichen Verlauf eines Sensorsignals 32 eines zweiten Sensors zeigt. Im bevorzugten Ausführungsbeispiel ist der zweite Sensor als Annäherungssensor ausgeführt und am Werkzeug 56 derart befestigt, dass der Annährungssensor den Abstand des Werkzeugs 56 zum Werkstück 54 erfasst. Bis zum Zeitpunkt des ersten Kontaktes des Werkstücks 54 mit dem Werkzeug 56 wird keine Annäherung vom zweiten Sensor registriert. Beim Zeitpunkt des ersten Kontaktes wird eine Annäherung angezeigt, bei dem das Sensorsignal 32 abfällt. Dabei zeigt ein hohes Sensorsignal 32 einen Abstand eines Objektes zum Annäherungssensor an, während ein niedriges Sensorsignal 32 ein nahes Objekt anzeigt. Nachfolgend wird anhand der Figuren 3b und 3c der weitere Produktionsablauf der Produktionsmaschine und die Darstellung auf der Anzeigeeinheit 14 erläutert, wobei gleiche Gegenstände mit den gleichen Bezugszeichen bezeichnet sind. Figur 3b zeigt im ersten Fenster 60 ein weiteres von der Kamera erzeugtes Bild 50, wobei das Bild 50 ebenfalls den Maschinentisch 52 mit dem Werkstück 54 und dem Werkzeug 56 zeigt. Das Bild 50 zeigt dabei den Zeitpunkt an dem das Werkzeug 56 einen Boden des Werkstücks 54 erreicht. Dieser Zeitpunkt markiert gleichzeitig den Punkt im Produktionsablauf an dem das Werkstück wieder nach oben fährt. Das zweite Fenster 62 im mittleren Drittel der Anzeigeeinheit 14 zeigt wieder den zeitlichen Verlauf des Sensorsignals 32 des Vibrationssensors. Zu diesem Zeitpunkt, der ebenfalls durch die Markierung 58 angezeigt wird, werden starke Vibrationen vom Vibrationssensor erfasst. Das Sensorsignal 32 des Annäherungssensors im dritten Fenster 64 im unteren Drittel der Anzeigeeinheit zeigt keine Änderung.
Figur 3c zeigt im ersten Fenster 60 ein weiteres von der Kamera erzeugtes Bild 50, wobei das Bild 50 ebenfalls den Maschinentisch 52 mit dem Werkstück 54 und dem Werkzeug 56 zeigt. Das Bild 50 zeigt dabei den Zeitpunkt an dem das Werkzeug 56 beim Hochfahren das Werkstück 54 wieder verlässt. Das zweite Fenster 62 im mittleren Drittel der Anzeigeeinheit 14 zeigt wieder den zeitlichen Verlauf des Sensorsignals 32 des Vibrationssensors. Zu diesem Zeitpunkt, der ebenfalls durch die Markierung 58 angezeigt wird, wird ein Abfall Vibrationen vom Vibrationssensor erfasst. Das Sensorsignal 32 des Annäherungssensors im dritten Fenster 64 im unteren Drittel der Anzeigeeinheit steigt wieder an und zeigt damit an, dass sich das Werkzeug 56 vom Werkstück 54 entfernt. Anhand dieser in den Figuren 3a, 3b und 3c dargestellten Sequenz wird deutlich, dass ein Anwender schnell erkennen kann, wo eine Störung des Produktionsablaufes vorliegt. Vorliegend ist aus der Figur 3b zu erkennen, dass zu Zeitpunkt der Umkehr des Werkzeugs 56 starke Vibrationen auftreten. Es liegt ein Fehler in der Produktion des Werkstücks 54 vor. In einer weiteren Variante des bevorzugten Ausführungsbeispiels wird im ersten Fenster 60 statt einem Einzelbild eine sich wiederholende Videosequenz um den zu betrachtenden Zeitpunkt angezeigt. Die mobile Vorrichtung stellt dem Anwender ferner eine Mensch-Maschinen-Schnittstelle zur Verfügung, um die gewünschten Anzeigen einstellen zu können. In einer Variante des bevorzugten Ausführungsbeispiels wird alternativ oder zusätzlich in einem Fenster zeitlich synchronisiert ein Fehlercode der Produktionsmaschine als Produktionsmaschinendatum angezeigt.

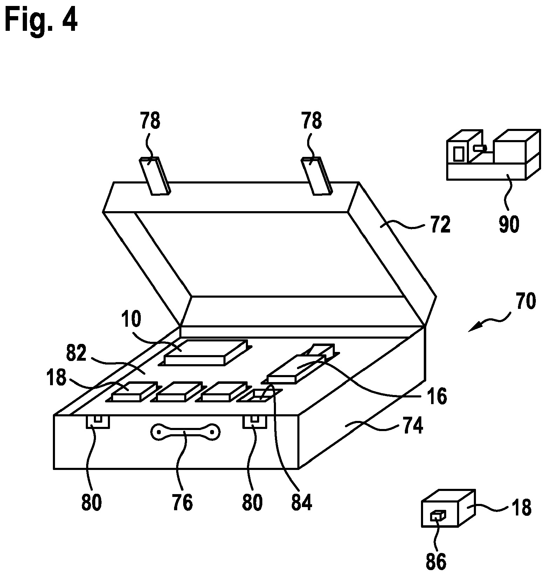

Figur 4 zeigt einen Koffer 70 mit einem Set zur Analyse eines Produktionsablaufes einer Produktionsmaschine 90. Die Produktionsmaschine 90 ist schematisch in der Figur 4 dargestellt. Der Koffer 70 besteht aus einem Kofferunterteil 74 und einem Kofferdeckel 72. Am Kofferunterteil 74 befindet sich ein Koffergriff 76 zum Tragen des Koffers 70 durch einen Anwender. Der Kofferdeckel 72 wird mit dem Kofferunterteil 74 nach dem Schließen des Koffers 70 durch zwei am Kofferdeckel 72 befindliche Schnallen 78 und zwei am Kofferunterteil 74 befindlichen Unterteile 80 der Schnallen 78 verschlossen. Im Inneren des Koffers 70 befindet sich eine Koffereinlage 82, die Aussparungen 84 zur Aufnahme der Einzelelemente des Sets zur Analyse eines Produktionsablaufes einer Produktionsmaschine 90 enthält. Das Set zur Analyse eines Produktionsablaufes einer Produktionsmaschine 90 umfasst eine mobile Vorrichtung 10, wie Sie in der Figur 1 beschrieben ist. Ferner umfasst das Set zur Analyse eines Produktionsablaufes einer Produktionsmaschine 90 verschiedene Sensoren 18 und eine Kamera 16. Im bevorzugten Ausführungsbeispiel sind die Sensoren 18 und die Kamera 16 derart vorkonfiguriert, dass die Sensoren 18 und die Kamera 16 nach Anschluss an die mobile Vorrichtung 10 ohne weitere Konfigurationen betriebsbereit sind. Ferner zeigt Figur 4 einen aus dem Koffer 70 entnommenen Sensor 18, der eine mechanische Schnittstelle in Form eines Magneten 86 zur Befestigung an die Produktionsmaschine 90 aufweist.

## Patentansprüche

1. Verfahren zur Analyse eines Produktionsablaufes einer Produktionsmaschine (90) umfassend die Schritte:
empfangen von Videosignalen (30) der Produktionsmaschine (90) von einer Kamera (16),
empfangen von Sensorsignalen (32) eines an der Produktionsmaschine (90) angebrachten oder anbringbaren Sensors (18),
zeitbasiert und/oder ereignisbasiert synchronisieren der empfangenen Videosignale (30) und der empfangenen Sensorsignale (32),
ausgeben der synchronisierten Signale an einer Anzeigeeinheit (14).

2. Verfahren nach einem der vorhergehenden Ansprüche,
**dadurch gekennzeichnet,**
**dass** Produktionsmaschinendaten (34) von der Produktionsmaschine (90) empfangen werden, wobei die Produktionsmaschinendaten (34) von der Produktionsmaschine (90) erzeugt werden, wobei die Produktionsmaschinendaten (34) vorzugsweise Fehlercodes von aufgetretenen Fehlern der Produktionsmaschine (90) und/oder Produktionsmaschinenkennwerte, wie Taktzeiten, und/oder Trigger-Signale zur Synchronisation mit einem Bearbeitungsprozess umfassen, wobei die Produktionsmaschinendaten (34) zeitbasiert und/oder ereignisbasiert synchronisiert mit den Videosignalen (30) oder den Sensorsignalen (32) an einer Anzeigeeinheit (14) ausgegeben werden.

3. Verfahren nach einem der vorhergehenden Ansprüche,
**dadurch gekennzeichnet,**
**dass** die empfangenen Videosignale (30) durch Bildverarbeitungsalgorithmen verarbeitet werden, wobei insbesondere durch Objekterkennung und/oder Objektverfolgung Produktionsmaschinenkennwerte, wie Taktzeiten, und/oder vordefinierte Ereignisse ermittelt werden.

4. Mobile Vorrichtung (10) zur Analyse eines Produktionsablaufes einer Produktionsmaschine (90), wobei die mobile Vorrichtung (10) insbesondere eingerichtet ist, das Verfahren nach einem der vorhergehenden Ansprüche auszuführen, umfassend:
eine Videokommunikationsschnittstelle (22) zum Empfangen von Videosignalen (30) der Produktionsmaschine (90) von einer Kamera (16),
zumindest einer Sensorkommunikationsschnittstelle (20) zum Empfangen von Sensorsignalen (32) eines an der Produktionsmaschine (90) angebrachten und/oder anbringbaren Sensors (18),
eine Auswerteeinheit (14), wobei die Auswerteeinheit (14) eingerichtet ist, die empfangenen Videosignale (30) und die empfangenen Sensorsignale (32) zeitbasiert und/oder ereignisbasiert zu synchronisieren,
eine Anzeigeeinheit (14) zur Ausgabe der synchronisierten Signale.

5. Mobile Vorrichtung (10) nach Anspruch 4,
**dadurch gekennzeichnet,**
**dass** die Videokommunikationsschnittstelle (22) zum Empfangen von Videosignalen (30) einer Hochgeschwindigkeitskamera eingerichtet ist.

6. Mobile Vorrichtung (10) nach einem der Ansprüche 4 oder 5,
**dadurch gekennzeichnet,**
**dass** die zumindest eine Sensorkommunikationsschnittstelle (20) zum drahtlosen Empfangen von Sensorsignalen (32) eingerichtet ist.

7. Mobile Vorrichtung (10) nach einem der Ansprüche 4 bis 6,
**dadurch gekennzeichnet,**
**dass** die mobile Vorrichtung (10) zumindest eine weitere Kommunikationsschnittstelle (24) umfasst, wobei die zumindest eine weitere Kommunikationsschnittstelle (24) zum Empfangen von von der Produktionsmaschine (90) erzeugten Produktionsmaschinendaten (34) eingerichtet ist, wobei die Produktionsmaschinendaten (34) vorzugsweise Fehlercodes von aufgetretenen Fehlern der Produktionsmaschine (90) und/oder Produktionsmaschinenkennwerte, wie Taktzeiten, umfassen.

8. Computerprogramm mit Programmcode-Mitteln, um alle Schritte von dem Verfahren gemäß einem der Ansprüche 1 bis 3 durchzuführen, wenn das Programm auf einem Computer und/oder einer mobilen Vorrichtung (10) gemäß einem der Ansprüche 4 bis 7 ausgeführt wird.

9. Set zur Analyse eines Produktionsablaufes einer Produktionsmaschine (90) umfassend:
eine mobile Vorrichtung (10) nach einem der Ansprüche 4 bis 7,
eine Kamera (16) und zumindest einen an der Produktionsmaschine (90) angebrachten oder anbringbaren, insbesondere drahtlosen, Sensor (18).

10. Set nach Anspruch 9,
**dadurch gekennzeichnet,**
**dass** die Kamera (16) eine Hochgeschwindigkeitskamera ist.

11. Set nach einem der Ansprüche 9 oder 10,
**dadurch gekennzeichnet,**
**dass** der zumindest eine Sensor (18) eine mechanische Schnittstelle umfasst, wobei die mechanische Schnittstelle derart ausgebildet ist, dass der zumindest eine Sensor (18) an der Produktionsmaschine (90) anbringbar ist, wobei die mechanische Schnittstelle vorzugsweise einen Magneten (86) umfasst.

12. Set nach einem der Ansprüche 9 bis 11,
**dadurch gekennzeichnet,**
**dass** der zumindest eine Sensor (18) ausgebildet ist, zumindest eine physikalische Messgröße zu erfassen, insbesondere, dass der Sensor (18) Vibrationen und/oder Luftschall und/oder Licht und/oder eine Annäherung eines Objektes erfasst.

13. Koffer (70) mit einem Set zur Analyse eines Produktionsablaufes einer Produktionsmaschine (90) nach einem der Ansprüche 9 bis 12.
